# EUROPÄISCHE PATENTSCHRIFT

(11) **EP 2 609 306 B1**
(45) Veröffentlichungstag und Bekanntmachung des Hinweises auf die Patenterteilung: **06.01.2016**
(21) Anmeldenummer: 11736286.3
(22) Anmeldetag: 22.07.2011
(51) Int. Cl.: F01P 5/14

(54) **BRENNKRAFTMASCHINE MIT EINER VORRICHTUNG ZUR DIAGNOSE EINER KÜHLMITTELPUMPE UND VERFAHREN ZUR DIAGNOSE EINER KÜHLMITTELPUMPE**
INTERNAL COMBUSTION ENGINE WITH A DEVICE FOR DIAGNOSING A COOLANT PUMP AND METHOD FOR DIAGNOSING A COOLANT PUMP
MOTEUR À COMBUSTION INTERNE AVEC DISPOSITIF PERMETTANT LE DIAGNOSTIC D'UNE POMPE À LIQUIDE DE REFROIDISSEMENT ET PROCÉDÉ DE DIAGNOSTIC D'UNE POMPE À LIQUIDE DE REFROIDISSEMENT

(30) Priorität: 25.08.2010 DE 102010035366
(43) Veröffentlichungstag der Anmeldung: 03.07.2013
(73) Patentinhaber: Audi AG, 85045 Ingolstadt (DE)
(72) Erfinder: GRAF, Johann, 93345 Hausen (DE)
(86) Internationale Anmeldenummer: PCT/EP2011/003672
(87) Internationale Veröffentlichungsnummer: WO 2012/025178

(56) Entgegenhaltungen:
- WO-A1-99/15769
- DE-A1- 4 426 494
- DE-A1-102006 057 801
- DE-A1-102008 032 130
- US-A1- 2002 195 068
- US-A1- 2007 175 415
- US-B1- 6 321 695

## Beschreibung

Die Erfindung betrifft ein Verfahren und eine Vorrichtung zur Diagnose einer unabhängig vom Betriebszustand einer Brennkraftmaschine schaltbaren Kühlmittelpumpe zum Umwälzen eines Kühlmittels in einem Kühlmittelkreislauf der Brennkraftmaschine, wobei ein Istwert der Zylinderkopftemperatur der Brennkraftmaschine und ein Istwert der Kühlmitteltemperatur der Brennkraftmaschine erfasst wird.

Derartige Verfahren und Vorrichtungen werden eingesetzt, um die Funktionsweise einer schaltbaren Kühlmittelpumpe auf Fehlschaltungen hin zu überprüfen und daraus resultierende Schäden am Kühlmittelkreislauf und/oder der Brennkraftmaschine zu vermeiden. Schaltbare Kühlmittelpumpen werden zur Realisierung eines innovativen Thermomanagements (ITM) in Kühlmittelkreisläufen von Brennkraftmaschinen verwendet, um insbesondere das Aufheizverhalten der Brennkraftmaschine nach einem Kaltstart zu verbessern. Als schaltbare Kühlmittelpumpen können elektrisch antreibbare, von einem mechanischen Riementrieb abkoppelbare oder getopfte Kühlmittelpumpen zum Einsatz kommen. Bei getopften Kühlmittelpumpen wird ein Topf vorzugsweise unterdruck- oder hydraulikgesteuert über das Laufrad der Kühlmittelpumpe gestülpt, wodurch der Kühlmittelfluss reguliert werden kann. Die gattungsbildende DE 10 2008 032 130 A1 offenbart ein Verfahren und eine Vorrichtung zur Diagnose einer unabhängig vom Betriebszustand einer Brennkraftmaschine zu- und abschaltbaren Kühlmittelpumpe zum Umwälzen eines Kühlmittels in einem geschlossenen Kühlkreislauf der Brennkraftmaschine, wobei zu einem vorgegebenen Zeitpunkt nach einem erkannten Kaltstart der Brennkraftmaschine sowohl ein die Kühlmitteltemperatur (TCO) der Brennkraftmaschine repräsentierender Wert, als auch ein die Zylinderkopftemperatur (TZK) der Brennkraftmaschine repräsentierender Wert ermittelt und diese anschließend miteinander verglichen werden. In Abhängigkeit des Ergebnisses des Vergleiches wird die Kühlmittelpumpe hinsichtlich ihrer Funktionstüchtigkeit bewertet. Nachteilig ist, dass die verglichenen Werte von Kühlmitteltemperatur und Zylinderkopftemperatur lastabhängig in einem sehr breiten Toleranzband liegen können, wodurch die Gefahr für Fehldiagnosen steigt. So steigt die am Zylinderkopf gemessene Temperatur bei einer plötzlichen Lastanhebung überproportional stark an, während sich die Kühlmitteltemperatur am Auslass der Brennkraftmaschine erst mit zeitlicher Verzögerung anpasst. Solche Fehldiagnosen können zu einer Verunsicherung des Betreibers der Brennkraftmaschine führen und verursachen unnötige Wartungsarbeiten am Kühlmittelkreislauf.

Aufgabe der vorliegenden Erfindung ist es daher ein Verfahren und eine Vorrichtung zur Diagnose einer Kühlmittelpumpe für eine Brennkraftmaschine mit einer verringerten Anfälligkeit für Fehldiagnosen bereitzustellen.

Diese Aufgabe wird durch die Merkmale des Patentanspruchs 1 bzw. 7 gelöst.

Verfahren zur Diagnose einer schaltbaren Kühlmittelpumpe zum Umwälzen eines Kühlmittels in einem Kühlmittelkreislauf einer Brennkraftmaschine, wobei ein Istwert der Zylinderkopftemperatur der Brennkraftmaschine und ein Istwert der Kühlmitteltemperatur der Brennkraftmaschine erfasst wird und wobei der Istwert der Zylinderkopftemperatur mit einem Modellwert der Zylinderkopftemperatur, der sich aus dem Istwert der Kühlmitteltemperatur und mindestens einer Betriebsgröße der Brennkraftmaschine errechnet, verglichen und in Abhängigkeit des Vergleichsergebnisses die Funktionstüchtigkeit der Kühlmittelpumpe bewertet wird.

Indem der Istwert der Zylinderkopftemperatur mit einem hinterlegten und/oder errechneten spezifischen Modellwert der Zylinderkopftemperatur verglichen wird, kann trotz sich schnell ändernder Betriebszustände der Brennkraftmaschine eine zuverlässige Bewertung der Funktionstüchtigkeit der Kühlmittelpumpe erstellt werden, da kein direkter Vergleich mit weiteren, eventuell verzögert ansprechenden, Istwerten der Temperatur anderer Bauteile durchgeführt werden muss. Der Modellwert der Zylinderkopftemperatur kann in Form mehrerer Kennfelder in einer Datenbank hinterlegt sein, aus denen abhängig vom Betriebszustand der Brennkraftmaschine der passende ausgewählt wird. Alternativ kann der Modellwert der Zylinderkopftemperatur permanent neu errechnet werden. Wird der Istwert der Kühlmitteltemperatur um den Wert aus mindestens einer Betriebsgröße der Brennkraftmaschine korrigiert, so kann ein Modellwert der Zylinderkopftemperatur erstellt werden, der vergleichsweise exakt dem Istwert der Zylinderkopftemperatur bei vorliegen der jeweiligen Betriebsgröße der Brennkraftmaschine entspricht. Dadurch kann schnell auf einen sich ändernden Betriebszustand der Brennkraftmaschine, der durch die Betriebsgröße der Brennkraftmaschine repräsentiert wird, reagiert werden, was die Fehleranfälligkeit der Diagnose deutlich senkt.

In einer bevorzugten Ausführung des Verfahrens entspricht die Betriebsgröße der Brennkraftmaschine einem Istwert der Leistung der Brennkraftmaschine. Der Istwert der Leistung der Brennkraftmaschine ergibt sich durch das Produkt aus Winkelgeschwindigkeit und Last der Brennkraftmaschine. Die Winkelgeschwindigkeit ist eine Funktion der Drehzahl der Brennkraftmaschine und die Last wird vom abgegeben Drehmoment der Brennkraftmaschine repräsentiert.

In einer bevorzugten Ausführung des Verfahrens wird der Modellwert der Zylinderkopftemperatur in Abhängigkeit vom Istwert der Zylinderkopftemperatur gefiltert. Eine Filterung präzisiert den Modellwert der Zylinderkopftemperatur zusätzlich. So wird vorzugsweise bei niedrigen Istwerten der Zylinderkopftemperatur kein Filter angewandt, während bei hohen Istwerten der Zylinderkopftemperatur eine Filterkonstante angewandt werden kann.

In einer bevorzugten Ausführung des Verfahrens wird die Kühlmittelpumpe als fehlerhaft bewertet, wenn das Vergleichsergebnis außerhalb eines Toleranzbandes liegt. Durch ein Toleranzband werden geringe Abweichungen zwischen Istwert und Modellwert der Zylinderkopftemperatur kompensiert, so dass die Fehleranfälligkeit der Diagnose noch weiter gesenkt werden kann.

In einer bevorzugten Ausführung des Verfahrens zählt ein Häufigkeitszähler eine Anzahl der außerhalb eines Toleranzbandes liegenden Vergleichsergebnisse und die Kühlmittelpumpe wird erst dann als fehlerhaft bewertet, wenn die Anzahl eine vorgegebene Häufigkeit überschreitet. Das einmalige Auftreten eines Vergleichsergebnisses außerhalb des Toleranzbandes kann durch Messfehler oder kurzzeitige technische Probleme bedingt sein. Damit diese Ereignisse nicht zu falschen Diagnoseergebnissen führen, werden die außerhalb des Toleranzbandes liegenden Vergleichsergebnisse von einem Häufigkeitszähler gezählt und die Kühlmittelpumpe erst dann als fehlerhaft bewertet, wenn eine bestimmte Anzahl an Überschreitungen (in einem bestimmten Zeitraum) erkannt wurden.

In einer bevorzugten Ausführung des Verfahrens wird das Verfahren nur bei einem Zuschalten der Kühlmittelpumpe gestartet. Die Überwachung des Kühlmittelkreislaufs ist in der Regel nur notwendig, wenn die vorher abgeschaltete Kühlmittelpumpe aufgrund einer ausreichend erwärmten Brennkraftmaschine wieder zugeschaltet werden soll. Das Verfahren befindet sich bei einer abgeschalteten Kühlmittelpumpe somit in einem Bereitschaftszustand und wird erst dann für eine bestimmte Zeit aktiv, wenn die Kühlmittelpumpe zugeschaltet wird. Die Kühlmittelpumpe wird zur Vermeidung von Temperaturschocks an den Bauteilen des Kühlmittelkreislaufs intervallartig zu- und abgeschaltet, bevor sie im dauerhaft zugeschalteten Zustand betrieben wird. Bevorzugt sollte die Beendigung dieses intervallartigen Betriebes für den Start des Verfahrens abgewartet werden.

Eine erfindungsgemäße Vorrichtung zur Diagnose einer schaltbaren Kühlmittelpumpe zum Umwälzen eines Kühlmittels in einem Kühlmittelkreislauf einer Brennkraftmaschine umfasst einen ersten Temperatursensor, der einen Istwert der Zylinderkopftemperatur der Brennkraftmaschine erfasst, einen zweiten Temperatursensor, der einen Istwert der Kühlmitteltemperatur der Brennkraftmaschine erfasst, eine Motormanagementeinrichtung, die mindestens eine Betriebsgröße der Brennkraftmaschine erfasst, und eine Auswerteeinrichtung, wobei der Istwert der Zylinderkopftemperatur von der Auswerteeinrichtung mit einem Modellwert der Zylinderkopftemperatur, der sich aus dem Istwert der Kühlmitteltemperatur und der mindestens einen Betriebsgröße der Brennkraftmaschine errechnet, verglichen wird und die Auswerteeinrichtung in Abhängigkeit des Vergleichsergebnisses die Funktionstüchtigkeit der Kühlmittelpumpe bewertet.

Eine schaltbare Kühlmittelpumpe kann bedarfsweise zu- und abgeschaltet werden, um das Thermomanagement der Brennkraftmaschine zu unterstützen. Die in der Regel als Kreiselpumpe ausgebildete Kühlmittelpumpe, kann über einen schaltbaren elektrischen Antrieb oder eine Trennkupplung verfügen oder als getopfte Kühlmittelpumpe ausgeführt sein. In einer bevorzugten Ausführungsform ist die getopfte Kühlmittelpumpe mittels eines unterdruckgesteuert über das Pumpenrad verschiebbaren Topfes regelbar. Durch den Vergleich des vom ersten Temperatursensor ermittelten Istwerts der Zylinderkopftemperatur mit dem Modellwert der Zylinderkopftemperatur, wird die Bewertung der Funktionstüchtigkeit nicht durch sich rasch verändernde Betriebszustände der Brennkraftmaschine beeinträchtigt. Dazu kann eine Vielzahl spezifischer Modellwerte der Zylinderkopftemperatur in einer Datenbank mit Kennfeldern hinterlegt sein, die die Auswerteeinrichtung fallabhängig zum Vergleich heranziehen kann. Alternativ kann ein Modellwert der Zylinderkopftemperatur fallabhängig von der Auswerteeinrichtung errechnet werden. Eine rasche Änderung des Betriebszustandes der Brennkraftmaschine wird vom ersten Temperatursensor am Zylinderkopf besonders schnell registriert, da im Zylinderkopf die Verbrennung des Kraftstoffs stattfindet. Indem der zweite Temperatursensor den Istwert der Kühlmitteltemperatur erfasst und mit der von der Motormanagementeinrichtung bereitgestellten Betriebsgröße der Brennkraftmaschine zu dem Modellwert der Zylinderkopftemperatur verrechnet, kann das im Vergleich zum ersten Temperatursensor verzögerte Ansprechen des außerhalb der Brennkraftmaschine angeordneten zweiten Temperatursensors kompensiert werden. Daraus resultiert ein besonders zuverlässiger Modellwert der Zylinderkopftemperatur. Als Betriebsgröße der Brennkraftmaschine eignet sich besonders die momentane Leistungsabgabe, die die Motormanagementeinrichtung aus dem Produkt von Winkelgeschwindigkeit und Last der Brennkraftmaschine errechnen kann.

In einer bevorzugten Ausführung der Vorrichtung nimmt eine Wandung des Zylinderkopfes den ersten Temperatursensor (8) und ein Kühlmittelvorlauf (11) des Kühlmittelkreislaufs (3) den zweiten Temperatursensor (9) auf.. Der erste Temperatursensor hat somit keinen direkten Kontakt zu dem im Zylinderkopf befindlichen Kühlmittel, sondern misst die Kühlmitteltemperatur indirekt über die Temperatur des Zylinderkopfmaterials. Der zweite Temperatursensor ist im Kühlmittelvorlauf nahe der Brennkraftmaschine angeordnet und misst die Temperatur des aus der Brennkraftmaschine austretenden Kühlmittels direkt.

In einer bevorzugten Ausführung der Vorrichtung wird die Kühlmittelpumpe von der Auswerteeinheit als fehlerhaft bewertet, wenn ein Häufigkeitszähler der Auswerteeinheit eine über einer vorgegebenen Häufigkeit liegende Anzahl von außerhalb eines Toleranzbandes liegender Vergleichsergebnisse zählt. Indem ein Häufigkeitszähler die außerhalb eines Toleranzbandes liegenden Vergleichsergebnisse zählt und die Kühlmittelpumpe erst dann als fehlerhaft bewertet wird, wenn eine vorgegebene Häufigkeit der Anzahl überschritten ist, kann die Diagnose deutlich zuverlässiger erfolgen.

In einer bevorzugten Ausführung der Vorrichtung gibt eine Warneinrichtung eine Warnmeldung aus, wenn die Kühlmittelpumpe von der Auswerteeinheit als fehlerhaft bewertet wird. Die von der Warneinrichtung ausgegebene Warnmeldung soll den Betreiber der Brennkraftmaschine über den Fehler der Kühlmittelpumpe informieren, damit dieser Gegenmaßnahmen einleiten kann.

In einer bevorzugten Ausführung der Vorrichtung sind die Auswerteeinrichtung, die Motormanagementeinrichtung und eine Kühlmittelpumpensteuerung Bestandteile eines Steuergeräts für die Brennkraftmaschine. Das Steuergerät dient primär der Steuerung und/oder Regelung der Brennkraftmaschine, insbesondere der Luft- und Kraftstoffzufuhr.

Weitere Einzelheiten, Vorteile und Merkmale der Erfindung ergeben sich aus der nachstehenden Beschreibung eines bevorzugten Ausführungsbeispiels unter Bezugnahme auf die Zeichnungen.

Darin zeigen:
Fig. 1 eine schematische Ansicht eines Kühlmittelkreislaufs mit einer erfindungsgemäßen Vorrichtung;
Fig. 2 ein Ablaufdiagramm eines erfindungsgemäßen Verfahrens.

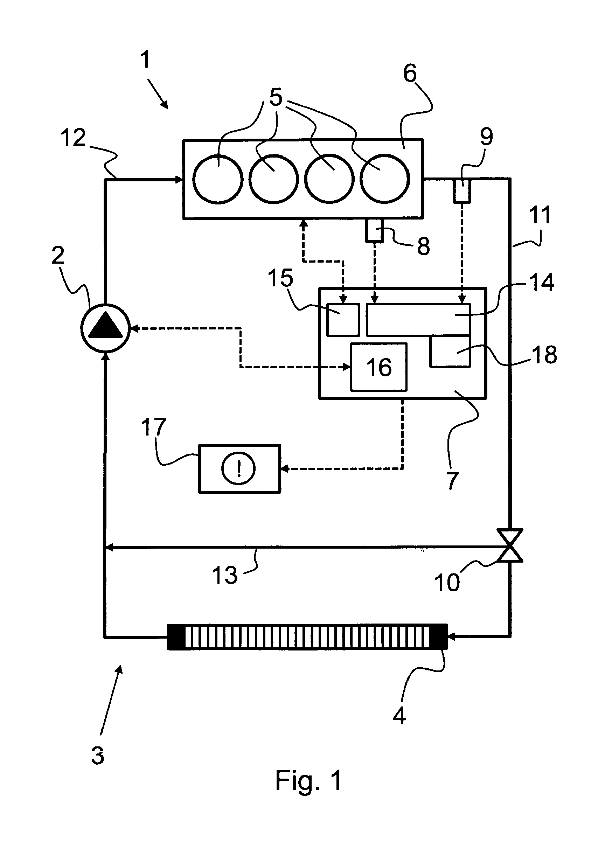

Gemäß Fig. 1 hat ein Kühlmittelkreislauf 3 für eine Brennkraftmaschine 1 einen Wärmetauscher 4 und eine zu- und abschaltbare Kühlmittelpumpe 2 zum Umwälzen des Kühlmittels zwischen Brennkraftmaschine 1 und Wärmetauscher 4. Die Brennkraftmaschine 1 ist vorliegend auf einen Zylinderkopf 6 mit vier Zylindern 5, in denen die Verbrennung des zugeführten Kraftstoffs stattfindet, reduziert. Der Zylinderkopf 6 ist mit nicht dargestellten Hohlräumen durchsetzt, die zur Übertragung der Abwärme aus dem Verbrennungsprozess mit Kühlmittel befüllt sind. Das Kühlmittel aus der Brennkraftmaschine 1 wird über einen Kühlmittelvorlauf 11 zu dem Wärmetauscher 4 geführt, um dort mittels der Umgebungsluft rückgekühlt zu werden. Von dem Wärmetauscher 4 geht ein Kühlmittelrücklauf 12 zurück zur Brennkraftmaschine 1. Die als getopfte Kreiselpumpe ausgebildete Kühlmittelpumpe 2 erzeugt im zugeschalteten Zustand die zur Kühlmittezirkulation benötigte Strömung. Wenn ein Stellventil 10 entsprechend betätigt wird, kann der Wärmetauscher 4 über einen Bypass 13 umgangen werden. In einer Wandung des Zylinderkopfes 6 ist ein erster Temperatursensor (THd) 8 angeordnet, der keinen direkten Kontakt zum Kühlmittel im Zylinderkopf 6 hat, sondern die Werkstofftemperatur des Zylinderkopfes 6 erfasst. Im Kühlmittelvorlauf 11 nahe des Zylinderkopfes 6 ist ein zweiter Temperatursensor (TCO) 9 angeordnet, der direkten Kontakt zum Kühlmittel im Kühlmittelvorlauf 11 hat und die Temperatur des aus dem Zylinderkopf 6 austretenden Kühlmittels erfasst. Ein Steuergerät 7 für die Brennkraftmaschine 1 umfasst eine Auswerteeinrichtung 14, eine Motormanagementeinrichtung 15, eine Kühlmittelpumpensteuerung 16 und einen Häufigkeitszähler 18. In die Auswerteeinrichtung 14 fließen Signale des ersten 8 und zweiten Temperatursensors 9 ein. Die Motormanagementeinrichtung 15 tauscht Signale, beispielsweise zur Drehzahl und Last, mit Komponenten der Brennkraftmaschine 1 aus. Durch die Kühlmittelpumpensteuerung 16 ist die Kühlmittelpumpe 2 zu- und abschaltbar. Der Häufigkeitszähler 18 zählt bestimmte Ereignisse der Auswerteeinheit 14. Das Steuergerät 7 kann eine Warnmeldung einer Warneinrichtung 17 veranlassen, wenn eine Fehlfunktion der Kühlmittelpumpe 2 festgestellt wurde.

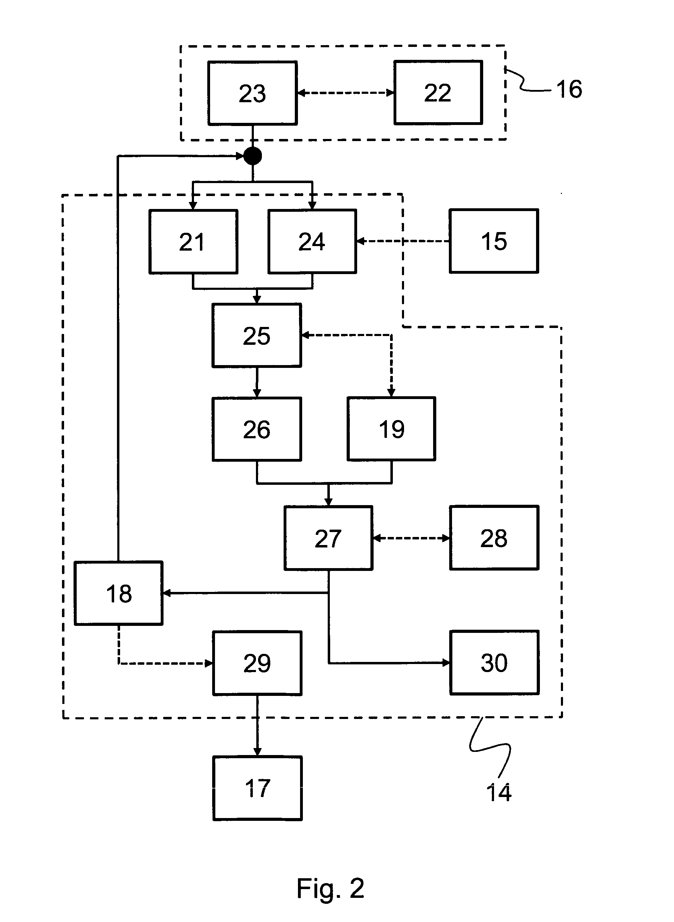

In Fig. 2 ist ein möglicher schematischer Ablauf eines erfindungsgemäßen Verfahrens zur Diagnose einer in Fig. 1 dargestellten Kühlmittelpumpe 2 einer Brennkraftmaschine 1 dargestellt. Das Verfahren wird in Abhängigkeit des von der Kühlmittelpumpensteuerung 16 festgelegten Betriebszustands der Kühlmittelpumpe 2 gestartet. Wurde die Kühlmittelpumpe 2 abgeschaltet (22), wird das Verfahren nicht gestartet. Wurde die Kühlmittelpumpe 2 aus dem abgeschalteten Zustand (22) heraus hingegen wieder zugeschaltet (23), so wird das Verfahren gestartet, indem der Istwert der Kühlmitteltemperatur 21 von einem zweiten Temperatursensor 9 und eine Betriebsgröße der Brennkraftmaschine 24, vorliegend der Istwert der Leistung der Brennkraftmaschine 1, von einer Motormanagementeinrichtung 15 abgefragt werden. Der Istwert der Kühlmitteltemperatur 21 und der Istwert der Leistung 24 führen zu einem in der Auswerteeinrichtung 14 hinterlegten Modellwert der Zylinderkopftemperatur 26, der jedoch in einem Zwischenschritt in Abhängigkeit vom Istwert der Zylinderkopftemperatur 19 gefiltert wird. So findet bei niedrigen Zylinderkopftemperaturen 19 keine Filterung statt, während der Modellwert der Zylinderkopftemperatur 26 bei hohen Zylinderkopftemperaturen 19 um eine Filterkonstante korrigiert wird. Der gefilterte Modellwert der Zylinderkopftemperatur 26 und der Istwert der Zylinderkopftemperatur 19 werden in einem Subtrahierer 27 voneinander subtrahiert und absolutiert. Das Vergleichsergebnis aus dem Subtrahierer 27 wird mit einem Toleranzband der Schwellwerte 28 verglichen. Liegt das Vergleichsergebnis aus dem Subtrahierer 27 innerhalb des Toleranzbands der Schwellwerte 28, so wird die Kühlmittelpumpe 2 als funktionsfähig betrachtet (30) und das Verfahren beendet. Liegt das Vergleichsergebnis aus dem Subtrahierer 27 außerhalb des Toleranzbandes der Schwellwerte 28, so wird das Verfahren beginnend mit der Erfassung der Istwerte der Kühlmitteltemperatur 21 und der Leistung der Brennkraftmaschine 24 erneut gestartet und der Häufigkeitszähler 18 um eins erhöht. Hat der Häufigkeitszähler 18 innerhalb einer bestimmten Zeitspanne eine bestimmte Anzahl an Überschreitungen des Vergleichsergebnisses gezählt, wird die Kühlmittelpumpe 2 als fehlerhaft betrachtet (29) und eine Warnmeldung für den Betreiber der Brennkraftmaschine 2 durch die Warneinrichtung 17 veranlasst.

### Liste der Bezugszeichen:

- 1: Brennkraftmaschine
- 2: Kühlmittelpumpe
- 3: Kühlmittelkreislauf
- 4: Wärmetauscher
- 5: Zylinder
- 6: Zylinderkopf
- 7: Steuergerät
- 8: erster Temperatursensor (THd)
- 9: zweiter Temperatursensor (TCO)
- 10: Stellventil
- 11: Kühlmittelvorlauf
- 12: Kühlmittelrücklauf
- 13: Bypass
- 14: Auswerteeinrichtung
- 15: Motormanagementeinrichtung
- 16: Kühlmittelpumpensteuerung
- 17: Warneinrichtung
- 18: Häufigkeitszähler
- 19: Istwert der Zylinderkopftemperatur
- 21: Istwert der Kühlmitteltemperatur
- 22: Kühlmittelpumpe wird abgeschaltet
- 23: Kühlmittelpumpe wird zugeschaltet
- 24: Betriebsgröße der Brennkraftmaschine
- 25: Filter
- 26: Modellwert der Zylinderkopftemperatur
- 27: Subtrahierer
- 28: Toleranzband der Schwellwerte
- 29: Kühlmittelpumpe fehlerhaft
- 30: Kühlmittelpumpe in Ordnung

## Patentansprüche

1. Verfahren zur Diagnose einer schaltbaren Kühlmittelpumpe (2) zum Umwälzen eines Kühlmittels in einem Kühlmittelkreislauf (3) einer Brennkraftmaschine (1), wobei ein Istwert der Zylinderkopftemperatur (19) der Brennkraftmaschine (1) und ein Istwert der Kühlmitteltemperatur (21) der Brennkraftmaschine (1) erfasst wird, **dadurch gekennzeichnet, dass** der Istwert der Zylinderkopftemperatur (19) mit einem Modellwert der Zylinderkopftemperatur (26), der sich aus dem Istwert der Kühlmitteltemperatur (21) und mindestens einer Betriebsgröße (24) der Brennkraftmaschine (1) errechnet, verglichen und in Abhängigkeit des Vergleichsergebnisses (29, 30) die Funktionstüchtigkeit der Kühlmittelpumpe (2) bewertet wird.

2. Verfahren nach Anspruch 1, **dadurch gekennzeichnet, dass** die Betriebsgröße (24) der Brennkraftmaschine (1) einem Istwert der Leistung der Brennkraftmaschine (1) entspricht.

3. Verfahren nach Anspruch 1 oder 2, **dadurch gekennzeichnet, dass** der Modellwert der Zylinderkopftemperatur (26) in Abhängigkeit vom Istwert der Zylinderkopftemperatur (19) gefiltert wird.

4. Verfahren nach einem der Ansprüche 1 bis 3, **dadurch gekennzeichnet, dass** die Kühlmittelpumpe (2) als fehlerhaft bewertet wird, wenn das Vergleichsergebnis (27) außerhalb eines Toleranzbandes (28) liegt.

5. Verfahren nach einem der Ansprüche 1 bis 3, **dadurch gekennzeichnet, dass** ein Häufigkeitszähler (18) eine Anzahl der außerhalb eines Toleranzbandes (28) liegenden Vergleichsergebnisse (27) zählt und die Kühlmittelpumpe (2) erst dann als fehlerhaft bewertet wird, wenn die Anzahl eine vorgegebene Häufigkeit überschreitet.

6. Verfahren nach einem der Ansprüche 1 bis 5, **dadurch gekennzeichnet, dass** das Verfahren nur bei einem Zuschalten (23) der Kühlmittelpumpe (2) gestartet wird.

7. Brennkraftmaschine (1) mit einem Kühlkreislauf (3) und einer Vorrichtung zur Diagnose einer schaltbaren Kühlmittelpumpe (2) zum Umwälzen eines Kühlmittels in dem Kühlmittelkreislauf (3), umfassend einen ersten Temperatursensor (8), der einen Istwert der Zylinderkopftemperatur (19) der Brennkraftmaschine (1) erfasst, einen zweiten Temperatursensor (9), der einen Istwert der Kühlmitteltemperatur (21) der Brennkraftmaschine (1) erfasst, eine Motormanagementeinrichtung (15), die mindestens eine Betriebsgröße (24) der Brennkraftmaschine (1) erfasst, und eine Auswerteeinrichtung (14), **dadurch gekennzeichnet, dass** der Istwert der Zylinderkopftemperatur (19) von der Auswerteeinrichtung (14) mit einem Modellwert der Zylinderkopftemperatur (26), der sich aus dem Istwert der Kühlmitteltemperatur (21) und der mindestens einen Betriebsgröße (24) der Brennkraftmaschine (1) errechnet, verglichen wird und die Auswerteeinrichtung (14) in Abhängigkeit des Vergleichsergebnisses (29, 30) die Funktionstüchtigkeit der Kühlmittelpumpe (2) bewertet.

8. Vorrichtung nach Anspruch 7, **dadurch gekennzeichnet, dass** eine Wandung des Zylinderkopfes (6) den ersten Temperatursensor (8) und ein Kühlmittelvorlauf (11) des Kühlmittelkreislaufs (3) den zweiten Temperatursensor (9) aufnimmt.

9. Vorrichtung nach Anspruch 7 oder 8, **dadurch gekennzeichnet, dass** die Kühlmittelpumpe (2) von der Auswerteeinheit (14) als fehlerhaft bewertet wird, wenn ein Häufigkeitszähler (18) der Auswerteeinheit (14) eine über einer vorgegebenen Häufigkeit liegende Anzahl von außerhalb eines Toleranzbandes (28) liegender Vergleichsergebnisse (29) zählt.

10. Vorrichtung nach einem der Ansprüche 7 bis 9, **dadurch gekennzeichnet, dass** eine Warneinrichtung (17) eine Warnmeldung ausgibt, wenn die Kühlmittelpumpe (2) von der Auswerteeinheit (14) als fehlerhaft bewertet wird.

11. Vorrichtung nach einem der Ansprüche 7 bis 10, **dadurch gekennzeichnet, dass** die Auswerteeinrichtung (14), die Motormanagementeinrichtung (15) und eine Kühlmittelpumpensteuerung (16) Bestandteile eines Steuergeräts (7) für die Brennkraftmaschine (1) sind.

## Claims

1. Method to perform diagnostics on a switchable coolant pump (2) to circulate coolant within a cooling circuit (3) of an internal combustion engine (1), whereby an actual value of the cylinder head temperature (19) of the combustion engine (1) and a current coolant temperature (21) of the combustion engine (1) are determined, **characterised by** the fact that the current value of the cylinder head temperature (19) is compared with a model value of the cylinder head temperature (26), which can be calculated deriving from the current value of the coolant temperature (21) and at least one operating value (24) of the combustion engine, (1) and depending on the comparative result, (29, 30) the functionality of the coolant pump is evaluated (2).

2. Method according to claim 1, **characterised by** the fact that the operating value (24) of the combustion engine (1) corresponds to a current value of the combustion engine's performance (1).

3. Method according to claim 1 or 2, **characterised by** the fact that the model value of the cylinder head temperature (26) is filtered depending on the current value of the cylinder head temperature (19).

4. Method according to one of the claims 1 to 3, **characterised by** the fact that the coolant pump (2) shall be assessed as being faulty if the comparative result (27) lies outside of the tolerance range (28).

5. Method according to one of the claims 1 to 3, **characterised by** the fact that a frequency counter (18) counts the number of comparative results (27) lying outside of the tolerance range (28) and - the coolant pump (2) is only assessed as being faulty if the number exceeds a specified frequency of occurrence.

6. Method according to one of the claims 1 to 5, **characterised by** the fact that the coolant pump (2) shall be deemed faults if the comparative result (23) lies outside of the tolerance range.

7. Combustion engine (1) with a cooling circuit (3) and a device to perform diagnostics on a switchable coolant pump (2) to circulate coolant within the cooling circuit (3) including a first temperature sensor (8) that detects a current value of the cylinder head temperature (19) of the internal combustion engine (1), a second temperature sensor (9) that detects an actual value of the coolant temperature (21) of the combustion engine (1), an engine management device (15) that detects at least one operating value (24) of the combustion engine (1) and an evaluator (14), **characterised by** the fact that the evaluator (14) compares the current value of the cylinder head temperature (19) with a model value of the cylinder head temperature (26), which can be calculated deriving from the current value of the coolant temperature (21) and at least one operating value (24) of the combustion engine (1), and the evaluator (14) evaluates the functionality of the coolant pump (2) depending on the comparative result (29, 30).

8. Device according to claim 7 **characterised by** the fact that a wall of the cylinder head (6) accommodates the first temperature sensor (8) and a coolant inlet (11) of the coolant circuit (3) accommodates the second temperature sensor (9).

9. Method according to claim 7 or 8, **characterised by** the fact that the coolant pump (2) is assessed as being faulty by the evaluator (14) if a frequency counter (18) of the evaluator (14) counts a number comparative results (29) lying beyond a tolerance range (28) that is over a specified frequency of occurrence.

10. Method according to one of the claims 7 to 9, **characterised by** the fact that a warning device (17) signals a warning if the coolant pump (2) is assessed as being faulty by the evaluator (14).

11. Device according to one of the claims 7 to 10, **characterised by** the fact that the evaluator (14), the engine management device (15) and a coolant pump control system (16) are components of a control unit (7) for the combustion engine (1).

## Revendications

1. Procédé de diagnostic d'une pompe de liquide de refroidissement commutable (2) destinée à faire circuler un liquide de refroidissement dans un circuit de refroidissement (3) d'un moteur à combustion interne (1), une valeur réelle de température de culasse (19) du moteur à combustion interne (1) et une valeur réelle de température de liquide de refroidissement (21) du moteur à combustion interne (1) étant détectées, **caractérisé en ce que** l'on compare la valeur réelle de température de culasse (19) à une valeur modèle de température de culasse (26) qui se calcule à partir de la valeur réelle de température de liquide de refroidissement (21) et d'au moins une grandeur de fonctionnement (24) du moteur à combustion interne (1) et **en ce que** l'on évalue la capacité à fonctionner de la pompe de liquide de refroidissement (2) en fonction du résultat de comparaison (29, 30).

2. Procédé selon la revendication 1, **caractérisé en ce que** la grandeur de fonctionnement (24) du moteur à combustion interne (1) correspond à une valeur réelle de la puissance du moteur à combustion interne (1).

3. Procédé selon la revendication 1 ou 2, **caractérisé en ce que** la valeur modèle de température de culasse (26) est filtrée en fonction de la valeur réelle de température de culasse (19).

4. Procédé selon l'une des revendications 1 à 3, **caractérisé en ce que** la pompe de liquide de refroidissement (2) est considérée comme défectueuse lorsque le résultat de comparaison (27) est en dehors d'une plage de tolérances (28).

5. Procédé selon l'une des revendications 1 à 3, **caractérisé en ce qu'**un compteur de fréquence (18) compte un nombre de résultats de comparaison (27) situés en dehors d'une plage de tolérances (28) et **en ce que** la pompe de liquide de refroidissement (2) n'est considérée comme défectueuse que lorsque le nombre dépasse une fréquence prédéterminée.

6. Procédé selon l'une des revendications 1 à 5, **caractérisé en ce que** le procédé n'est démarré que lors d'une mise en service (23) de la pompe de liquide de refroidissement (2).

7. Moteur à combustion interne (1) avec un circuit de refroidissement (3) et avec un dispositif pour le diagnostic d'une pompe de liquide de refroidissement commutable (2) destinée à faire circuler un liquide de refroidissement dans le circuit de refroidissement (3), comprenant un premier capteur de température (8) qui détecte une valeur réelle de température de culasse (19) du moteur à combustion interne (1), un deuxième capteur de température (9) qui détecte une valeur réelle de température de liquide de refroidissement (21) du moteur à combustion interne (1), un dispositif de gestion de moteur (15) qui détecte au moins une grandeur de fonctionnement (24) du moteur à combustion interne (1) et un dispositif d'évaluation (14), **caractérisé en ce que** la valeur réelle de température de culasse (19) est comparée par le dispositif d'évaluation (14) à une valeur modèle de température de culasse (26) qui se calcule à partir de la valeur réelle de température de liquide de refroidissement (21) et de l'au moins une grandeur de fonctionnement (24) du moteur à combustion interne (1) et **en ce que** le dispositif d'évaluation (14) évalue la capacité à fonctionner de la pompe de liquide de refroidissement (2) en fonction du résultat de comparaison (29, 30).

8. Dispositif selon la revendication 7, **caractérisé en ce qu'**une paroi de la culasse (6) loge le premier capteur de température (8) et une alimentation de liquide de refroidissement (11) du circuit de refroidissement (3) loge le deuxième capteur de température (9).

9. Dispositif selon la revendication 7 ou 8, **caractérisé en ce que** la pompe de liquide de refroidissement (2) est considérée comme défectueuse par l'unité d'évaluation (14) lorsqu'un compteur de fréquence (18) de l'unité d'évaluation (14) compte un nombre de résultats de comparaison (29) situés en dehors d'une plage de tolérances (28) qui dépasse une fréquence prédéterminée.

10. Dispositif selon l'une des revendications 7 à 9, **caractérisé en ce qu'**un dispositif avertisseur (17) délivre un message d'avertissement lorsque la pompe de liquide de refroidissement (2) est considérée comme défectueuse par l'unité d'évaluation (14).

11. Dispositif selon l'une des revendications 7 à 10, **caractérisé en ce que** le dispositif d'évaluation (14), le dispositif de gestion de moteur (15) et une commande de pompe de liquide de refroidissement (16) font partie d'un appareil de commande (7) pour le moteur à combustion interne (1).
